(19) Europäisches Patentamt
European Patent Office
Office européen des brevets

(11) Numéro de publication : **0 134 732**
**B1**

(12) **FASCICULE DE BREVET EUROPÉEN**

(45) Date de publication du fascicule du brevet : **11.10.89**

(51) Int. Cl.$^4$: **C 01 B 25/225**, C 01 B 25/237

(21) Numéro de dépôt : **84401455.5**

(22) Date de dépôt : **10.07.84**

(54) **Procédé de fabrication d'acide phosphorique purifié, appareillage et produit obtenu.**

(30) Priorité : **21.07.83 FR 8312089**

(43) Date de publication de la demande :
**20.03.85 Bulletin 85/12**

(45) Mention de la délivrance du brevet :
**11.10.89 Bulletin 89/41**

(84) Etats contractants désignés :
**AT BE CH DE FR GB IT LI LU NL SE**

(56) Documents cités :
**FR-A- 1 472 520**
**US-A- 1 487 205**
**US-A- 3 554 696**
**US-A- 3 644 091**
**CHEMICAL ABSTRACTS, vol. 96, no. 14, 5 avril 1982, page 136, no. 106594u, Columbus, Ohio, USA; & SU - A - 882 921 (ALMALUK CHEMICAL PLANT) 23-11-1981**

(73) Titulaire : **TIMAC S.A.**
**Quai intérieur B.P. no. 158**
**F-35408 St Malo Cedex (FR)**

(72) Inventeur : **Fayard, Christian**
**2, Rue Macé Jallobert**
**F-35400 Saint Malo (FR)**
Inventeur : **Champion, Jean**
**Avenue de la Plage**
**F-40440 Ondres (FR)**
Inventeur : **Simonet, André**
**"CHURIA" Impasse La Plaine**
**F-64600 Anglet (FR)**
Inventeur : **Latrie, Jean-Claude**
**22, Rue Ambroise Paré**
**F-64200 Biarritz (FR)**
Inventeur : **Siberchicot, Jean-Claude**
**20, Avenue du Grand-Jean**
**F-40220 Tarnos (FR)**

(74) Mandataire : **Richebourg, Michel François et al**
**Cabinet Beau de Loménie 55, rue d'Amsterdam**
**F-75008 Paris (FR)**

**EP 0 134 732 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention concerne un procédé de fabrication de l'acide phosphorique amélioré de manière décisive, du point de vue de la qualité de l'acide final concentré « 54 % ».

L'invention introduit des traitements chimiques supplémentaires dans le procédé de fabrication d'acide phosphorique ; on obtient ainsi, avec des rendements tout au moins équivalents, et de manière très simple, un acide phosphorique de qualité supérieure.

L'invention permet d'obtenir un acide phosphorique de faible teneur en fluor (< 0,2 %), sulfates totaux (< 2 %) (tous ions $SO_4^{=}$, libres ou combinés, sauf sous forme $H_2SO_4$), absence d'acide sulfurique, silice (< 0,1 %), matières organiques (< 0,1 %), matières en suspension (< 0,2 %), ce qui lui ouvre de grandes possibilités d'exploitation comme les engrais liquides, la production de phosphates calciques et ammoniques pour l'alimentation animale, l'industrie des détergents, les produits de traitement de surface, etc.

Si on veut obtenir de l'acide phosphorique de pureté répondant aux utilisations mentionnées ci-dessus, on est actuellement conduit à utiliser des procédés coûteux du fait d'équipements élaborés gros consommateurs d'énergie, demandant beaucoup d'entretien, ou alors des produits soit spécifiques, soit en fortes quantités.

Les minerais de phosphate contiennent principalement de la fluorapatite, qui est un minerai contenant du phosphate tricalcique et du fluorure de calcium.

La plupart des minerais de phosphate contiennent des impuretés telles que fluor, silice, fer, aluminium, carbonates de calcium et de magnésium, chlore, et des traces de sodium, chrome, potassium, uranium, métaux lourds, etc.

La réaction principale dans ce type d'atelier phosphorique, attaque sulfurique/procédé dihydrate, est celle qui a lieu entre le phosphate tricalcique et l'acide sulfurique et qui donne de l'acide phosphorique et du sulfate de calcium très peu soluble, selon la réaction :

$$Ca_3(PO_4)_2 + 3H_2SO_4 + 6H_2O \rightleftharpoons 3CaSO_4, 2H_2O + 2H_3PO_4$$

On rappellera que les autres procédés d'obtention d'acide phosphorique soit à « attaque sulfurique » (procédé hémihydrate), soit à attaque par un acide autre que sulfurique (notamment acide nitrique et/ou chlorhydrique) sont régis par des paramètres (températures, cristallisation, etc.) sans rapport avec le procédé concerné par la présente demande.

Ainsi, FR-A-1 472 520 révèle un procédé de fabrication d'acide phosphorique concentré à 22 %, obtenu par voie humide, par réaction de la roche de phosphate avec l'acide sulfurique. Il est également fait mention dans ce document d'une étape de désulfatation de l'acide phosphorique visant essentiellement à obtenir une meilleure cristallisation de gypse. Cependant, FR-A-1 472 520 fait appel, contrairement au procédé selon l'invention, à une adjonction de cristaux de gypse et considère comme exclue la possibilité d'obtenir de bons résultats de filtration en utilisant un milieu ayant une faible concentration en ions sulfate.

Par ailleurs, l'utilisation d'une étape de clarification à l'aide d'un floculant dans un procédé de fabrication d'acide phosphorique est connue, par exemple de l'article Chemical Abstracts, vol. 96, 1982, nº 106 594 W.

Il n'est pas besoin de décrire plus longuement les diverses réactions complexes se produisant dans ce milieu très riche, l'homme de l'art se reportant à ses connaissances et à la nombreuse littérature ayant trait au sujet. Nous ne reprenons pas non plus le fonctionnement bien connu d'une unité de production d'acide phosphorique (figure 1).

Cependant, il faut rappeler que la bonne marche de l'unité d'acide phosphorique dépend essentiellement d'un contrôle précis de la station de réaction; celle-ci doit accomplir trois fonctions principales :

1. extraire le maximum de $P_2O_5$
2. produire du gypse facilement filtrable et lavable
3. produire un acide phosphorique à haute teneur en $P_2O_5$

D'une façon générale, les performances de la station de réaction sont d'autant meilleures que l'ensemble très vaste des paramètres est bien contrôlé et régulé ; les taux d'inattaqué et de syncristallisé sont alors au minimum et les cristaux de gypse sont de type et de dimension optimaux (combinaisons appropriées — selon les minerais — de formes et dimensions indispensables pour une bonne filtrabilité et un bon rendement de filtration).

Les éléments essentiels de l'invention concernent trois événements, les deux premiers se situant au stade de la fabrication d'acide « 30 % » et le troisième à celui de la concentration en acide « 54 % ».

Ainsi, la présente invention a pour objet un procédé de fabrication d'acide phosphorique concentré, de pureté élevée, par concentration et défluoration subséquente d'un acide phosphorique non concentré obtenu par

réaction, dans une cuve d'attaque de l'acide sulfurique en excès sur du phosphate tricalcique ;

désulfatation du mélange réactionnel dans une cuve intermédiaire située en aval de ladite cuve d'attaque ;

filtration du mélange ainsi obtenu pour séparer l'acide phosphorique du sulfate de calcium solide, caractérisé en ce que

a) on contrôle et on maintient dans la cuve d'attaque le « taux d'excès sulfurique » à une valeur sensiblement constante et comprise entre 1 et 2 % ;

b) on contrôle et on maintient dans la cuve intermédiaire à une valeur comprise entre — 0,5 et + 0,5 % le « taux d'excès sulfurique » ;

c) la désulfatation est réalisée par introduction directe de phosphate tricalcique dans le mélange réactionnel provenant de la cuve d'attaque ;

d) pour obtenir une clarification du produit final, on ajoute un floculant au milieu réactionnel, après l'étape de filtration et lors de la défluoration précitée.

D'autres caractéristiques et avantages de l'invention seront mieux compris à la lecture de la description qui va suivre et en se référant au dessin annexé sur lequel :

la figure 1 représente une installation classique de fabrication d'acide phosphorique ;

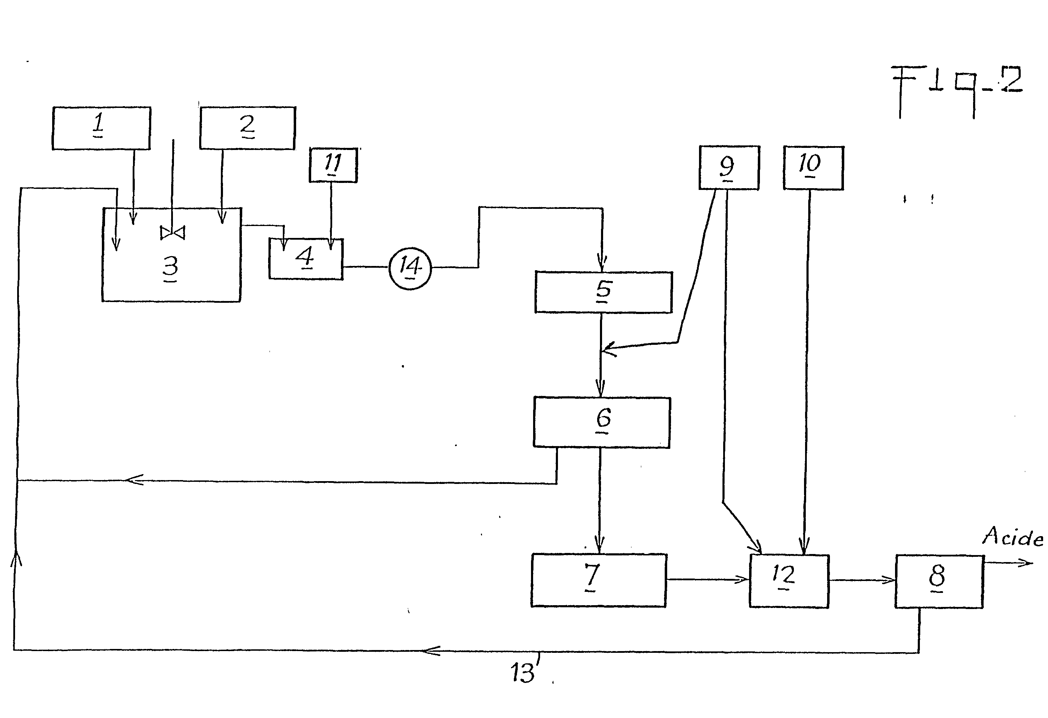

la figure 2 représente un mode de réalisation préféré d'un appareillage de mise en œuvre du procédé selon l'invention.

Sur ce dessin, les mêmes références ont les mêmes significations, qui sont les suivantes :

1. débitmètre d'acide sulfurique
2. dosomètre de phosphate tricalcique
3. réacteur d'attaque
4. cuve intermédiaire de désulfatation
5. station de filtration
6. cuve de stockage (acide à 30 % $P_2O_5$)
7. station de concentration (30 → 54 %)
8. cuve de stockage-décantation (acide à 54 %)
9. cuve de floculant
10. cuve de sel minéral (notamment sel de silice)
11. dosomètre de phosphate additionnel
12. cuve d'ajout du sel minéral
13. recyclage des boues
14. pompe

Le fonctionnement classique d'une unité de production d'acide phosphorique par attaque sulfurique est le suivant (figure 1).

L'acide sulfurique au travers du débitmètre 1 et le phosphate naturel au travers du dosomètre 2 sont mis en présence dans la station réaction 3 selon des processus différents mais qui consistent tous à solubiliser le phosphate tricalcique par l'acide sulfurique et obtenir une bouillie constituée par une suspension de sulfate de chaux dans l'acide phosphorique.

A l'aide d'une pompe 14, cette bouillie est envoyée à la station de filtration 5 dont la conception correspond à différentes technologies mais dont la fonction est toujours de séparer l'acide phosphorique liquide dit « 30 % » du sulfate de chaux solide.

Le sulfate de chaux séparé au cours de cette opération est évacué, l'acide phosphorique est stocké dans une cuve relais 6 où se produisent des dépôts plus ou moins importants selon l'origine du phosphate utilisé.

Dans la station de concentration 7, on utilise différents types d'appareillages et on s'appuie sur divers paramètres selon des techniques différentes mais qui conduisent toutes à l'évaporation de l'eau pour concentrer l'acide de « 30 % » à « 54 % » de $P_2O_5$, forme sous laquelle on le retrouve dans la cuve de stockage 8.

La première originalité du procédé selon l'invention réside dans le fait qu'il est possible et nécessaire de contrôler très précisément le rapport d'introduction du phosphate et de l'acide sulfurique dans la cuve d'attaque 3 et par là de maintenir un taux d'excès sulfurique (ions $H^+$ libres, déterminés par la différence entre les deux premières acidités, obtenue en suivant la courbe de titration de l'acide phosphorique) constant dans le réacteur, ce qui assure un meilleur rendement. Cette coordination est de mieux en mieux assurée par les moyens les plus récents de régulation pour les opérations de pesage et de débit en continu, d'une part, et par les méthodes appropriées d'analyse de l'excès sulfurique, d'autre part.

On contrôle très précisément l'excès des $H^+$ sulfuriques par courbe de titration ou par toute autre technique connue de l'homme de métier et permettant le même contrôle.

On opérera ce contrôle précis, d'une part, au niveau de la cuve d'attaque 3 et, d'autre part, au niveau de la cuve intermédiaire de désulfatation 4.

L'apport déterminant de l'invention est d'avoir défini très précisément le domaine de concentration de l'excès sulfurique et de savoir et pouvoir le contrôler à un taux bien constant dans la cuve d'attaque 3, taux qui seul permet, par une addition ultérieure d'une faible quantité supplémentaire de phosphate au niveau de la cuve intermédiaire 4, de réduire le taux de l'excès sulfurique dans cette cuve 4 à une valeur impérativement très proche de 0. Selon les minerais de départ, et en fonction de l'apparition éventuelle de phénomènes connus indésirables particuliers, liés à tel ou tel minerai, tels qu'incrustations, etc., on

choisira une valeur très légèrement positive (par exemple 0-0,5 %) ou très légèrement négative (par exemple — 0,5/0 %).

On sait qu'il sera intéressant de travailler plutôt avec une valeur moyenne négative, étant entendu que l'on sera rapidement limité en ce domaine, de manière connue, par l'accroissement du taux de phosphate inattaqué.

Pour parvenir à ces résultats capitaux dans la cuve 4, on maintiendra par les techniques de contrôle ci-dessus l'excès sulfurique dans la cuve 3 à une valeur de l'ordre de 1 à 2 %.

L'addition de phosphate dans la cuve intermédiaire et de nouveau les contrôles de la quantité de phosphate et de l'excès sulfurique dans cette cuve sont le deuxième élément de l'invention.

Le phosphate pour abaisser l'acide sulfurique en excès est ajouté au débordement du réacteur avant la cuve tampon d'alimentation du filtre. On opère ainsi après stabilisation de la cristallisation de la bouillie et, avec le temps de rétention dans la cuve tampon 4, le phosphate ajouté a le temps de réagir.

Il est surprenant de constater que, malgré le très faible taux en sulfate libre à la sortie de la cuve 4, selon l'invention, les taux d'inattaqué n'augmentent pas, et la cristallisation (qui conditionne la caractéristique essentielle de filtrabilité) n'est absolument pas affectée, alors que l'homme de métier craignait qu'elle le soit et que le procédé devienne pour ces raisons impraticable. Il est par ailleurs impossible, dans la connaissance actuelle de la technique, de descendre directement à une aussi faible valeur dans la cuve 3.

Si, cependant, on concentre ensuite directement l'acide désulfaté ainsi obtenu, on constate avec la plupart des minerais que l'acide concentré résultant contient des boues en quantités importantes et qui, surtout, ne sédimentent pas. Ceci représente un inconvénient rédhibitoire à l'échelle industrielle puisqu'il faut alors avoir recours à une étape très coûteuse de centrifugation qui fait de plus chuter le rendement, nécessite des investissements, immobilise de la main-d'œuvre, etc.

On a découvert selon l'invention que, pour ces minerais, si l'on combinait avec l'opération de désulfatation décrite ci-dessus une opération de défluoration, cet inconvénient disparaissait et l'on obtenait de surcroît un acide de qualité et de pureté exceptionnelles.

L'élimination du fluor dans l'acide phosphorique est effectuée, selon l'invention, au stade de la concentration par addition d'un sel minéral, comme le métasilicate de sodium $Na_2SiO_3$ qui s'est avéré donner les meilleurs résultats. La technique mise au point nécessite une modification de l'installation qui demande peu d'investissement, consomme peu d'énergie et n'amène pas de surcroît d'entretien. Toutefois, certaines conditions sont à respecter impérativement sous peine d'obtenir un acide de qualité inférieure à l'acide normal, par exemple un taux de silice important au lieu de traces, ainsi que de rencontrer de sérieux problèmes d'incrustation comme cela arrive fréquemment dans de nombreuses installations de concentration d'acide phosphorique.

Le métasilicate anhydre $Na_2SiO_3$ peut être utilisé sous forme de poudre ou être dilué avec de l'eau à environ 80 °C dans une cuve agitée, à la dose de 200 g/l environ (bac 10).

Il est ajouté dans l'acide phosphorique concentré à la sortie du concentrateur 7 dans une cuve agitée 12 dont le volume doit permettre un temps de rétention d'au moins 10 min.

L'addition doit être la plus régulière possible suivant la dose maximale de 1 % de métasilicate par rapport au $P_2O_5$ traité.

Il se forme une précipitation très fine qui est ensuite coagulée (par un floculant organique) avec du sulfate de chaux.

A noter que, par exemple pour le minerai TOGO, sans l'étape de désulfatation, on n'arrive après défluoration qu'à un produit chargé de boues qui ne sédimentent pas. Dans l'art antérieur, on pouvait espérer à l'échelle industrielle ramener la teneur en fluor à 0,8-1 %. Selon l'invention, on parvient sans difficultés à 0,2 %, ce qui représente un progrès considérable. L'invention permet également d'abaisser la proportion de magnésium jusqu'à environ 0,05 % (exprimé en MgO), ce qui est important pour la fabrication d'engrais liquides par exemple.

De préférence, on effectuera un premier ajout de floculant entre le filtre 5 et la cuve de stockage-décantation 6 et un second ajout entre la cuve 7 de concentration et la seconde cuve de stockage-décantation 8.

Le premier ajout de floculant permet de parfaire de manière connue la séparation du sulfate de chaux contenu dans l'acide phosphorique « 30 % » obtenu, ainsi que la plupart des particules en suspension. La décantation mise au point permet l'utilisation d'une grande gamme de floculants organiques du type polyacrylate avec des doses minimes par rapport au $P_2O_5$ traité.

Il est important de souligner que l'invention ne fait appel à aucune centrifugation (progrès industriel considérable).

Malgré cette absence de centrifugation, le taux de matières sèches dans l'acide purifié est facilement ramené à environ 0,2 %, ou même moins, selon l'invention, alors que l'on doit se contenter d'une teneur élevée, environ 3 % et au mieux 1 %, dans l'art antérieur.

Outre le fait que le rendement est amélioré, on obtient un très bel acide sous forme d'un liquide foncé transparent après seulement quelques heures à quelques jours de décantation, même en continu par double décantation, dans la cuve 8.

Les exemples suivants illustrent l'invention sans toutefois en limiter la portée.

Dans les exemples, tous les pourcentages sont exprimés en poids.

Exemple 1 : Minerai TOGO

Désulfatation

En dérivation du dosomètre phosphate 2, 0-36 t/h qui alimente le réacteur 3 de 180 $m^3$, on dispose un dosomètre 11 0-5 t/h qui va permettre d'ajouter du phosphate au débordement du réacteur avant la cuve tampon de 30 $m^3$ d'alimentation du filtre qu'on agite et dont on maintient le niveau à 50 %.

Une marche courante donne :

| | | | |
|---|---|---|---|
| Réacteur | Phosphate | 24 t/h | % $SO_4$ libre = 1,5 |
| | Acide sulfurique 98 % | 200 l/min | |
| Complément phosphate (11) | | 1,2 t/h | % $SO_4$ libre = 0 |

A la filtration, on relève une valeur habituelle de pertes soit :

| | |
|---|---|
| % $P_2O_5$ soluble | 1,8 |
| % $P_2O_5$ insoluble | 2,2 |
| % $P_2O_5$ total | 4 |

Défluoration

Dans un bac agité en acier caoutchouté ou similaire 10 de 1 $m^3$ ou plus, on prépare une solution à 200 g/l de métasilicate de sodium dans de l'eau à 80 °C. A l'aide d'une pompe doseuse péristaltique, on envoie la solution dans le bac de défluoration 12 ou, à partir d'un silo permettant le déchargement par camion pulsé, on dispose d'un extracteur et d'un dosomètre qui envoie la poudre dans le bac de défluoration.

Le bac de défluoration en acier caoutchouté ou similaire peut être le bac de garde hydraulique à la sortie du concentrateur. Il est pourvu d'un agitateur conçu de façon à homogénéiser le milieu réactionnel sans briser le floc en cours de formation. Une mise en dépression du bac est conseillée pour capter les vapeurs nocives qui se dégagent.

Un exemple de marche donne pour une production de 5 t/h de $P_2O_5$ :

| | |
|---|---|
| Métasilicate poudre | 50 kg/h ou |
| Métasilicate 200 g/l | 250 l/h |
| Volume du bac | 3 $m^3$ |
| Puissance agitateur | 1 CV |

Floculation

Elle est effectuée par addition de floculant organique du type polyacrylate. La préparation est effectuée dans une cuve unique en acier caoutchouté ou similaire 9 faiblement agitée (1 CV pour une cuve de 1 $m^3$).

A l'aide d'un disperseur, on prépare une solution à 0,8 g/l dans de l'eau à température ambiante.

L'addition s'effectue en deux stades par l'intermédiaire de deux pompes doseuses péristaltiques.

Après filtration dans le compartiment d'aspiration de la pompe qui envoie l'acide dans le décanteur de stockage d'acide phosphorique « 31 % » à la dose de 5 g/t de $P_2O_5$.

Après concentration dans la même cuve que le métasilicate de soude à la dose de 20 g/t de $P_2O_5$.

Clarification

L'acide concentré est pompé du bac de défluoration 12 vers une cuve de stockage 8 faisant office de décanteur. Cette cuve de type classique en acier caoutchouté ou similaire, d'une hauteur de 8 à 10 m, est munie d'une cheminée qui permet l'arrivée de l'acide à 1 m du fond du bac ; elle est équipée d'un râteau épaississeur tournant à la vitesse de 0,118 tr/min mû par un moteur de 2 CV pour un diamètre de 8 m.

L'acide clarifié se situe en partie haute du bac et déborde dans un deuxième bac identique au premier dans lequel une deuxième décantation permet d'obtenir le produit fini tel que spécifié par ailleurs.

Les boues d'acide phosphorique des décanteurs d'acide « 31 % » et « 54 % » sont reprises par des pompes à diaphragme pouvant assurer un débit de 8 à 80 l/min disposées au fond du bac et recyclées dans le réacteur d'acide phosphorique juste avant l'addition de phosphate.

Les résultats analytiques relatifs à l'acide phosphorique final ainsi obtenu sont rassemblés dans le tableau unique ci-après.

Exemple 2 : Minerai marocain BUCRAA

L'essai a été mené dans les mêmes conditions et avec les mêmes doses et les mêmes équipements que pour le « TOGO » (exemple 1).

Comme on part de seulement 0,3 % de fluor, on a pu diminuer l'addition de métasilicate en dessous de 1 %.

On peut donc dire que l'on atteint l'excellente valeur de 0,2 % F dans l'acide avec moins de 1 % de métasilicate.

L'acide décante bien et donne peu de boues, 2,5 % en moyenne.

Les résultats analytiques de l'acide obtenu sont également rassemblés dans le tableau unique ci-après.

Tableau

Acide phosphorique 54 %

| Minerai | TOGO | TOGO | BUCRAA | BUCRAA |
|---|---|---|---|---|
| Qualité acide | Normal | Traité selon l'invention | Normal | Traité selon l'invention |
| Densité | 1,680 (*) | 1,660 (*) | 1,640 (*) | 1,600 (*) |
| $P_2O_5$ % | 53 | 53 | 53 | 54,5 |
| $H_3PO_4$ | 73 | 73 | 73 | 75 |
| $SO_4$ totaux | 5 | 2 | 6 | 1,7 |
| F | 0,8 | 0,2 | 0,3 | 0,15 |
| $Fe_2O_3$ | 1,3 | 1,3 | 0,2 | 0,2 |
| $Al_2O_3$ | 0,6 | 0,6 | 0,5 | 0,35 |
| $SiO_2$ | 0,15 | 0,15 | 0,03 | 0,1 |
| MgO | 0,15 | 0,05 | 0,2 | 0,25 |
| CaO | 0,1 | 0,001 | traces | traces |
| Cl | 0,02 | 0,01 | 0,01 | 0,001 |
| Matière organique | 0,1 | 0,1 | 0,03 | traces |
| Matière en suspension | 3 (*) | 0,25 (*) | 1,5 (*) | 0,1 (*) |

(*) Analyses effectuées sur le produit tel quel. Les autres analyses du tableau sont effectuées sur le produit centrifuge. (centrifugation en laboratoire selon essai normalisé)

## Revendications

1. Procédé de fabrication d'acide phosphorique concentré, de pureté élevée, par concentration et défluoration subséquente d'un acide phosphorique non concentré obtenu par

réaction, dans une cuve d'attaque de l'acide sulfurique en excès sur du phosphate tricalcique ;

désulfatation du mélange réactionnel dans une cuve intermédiaire située en aval de ladite cuve d'attaque ;

filtration du mélange ainsi obtenu pour séparer l'acide phosphorique du sulfate de calcium solide, caractérisé en ce que

a) on contrôle et on maintient dans la cuve d'attaque le « taux d'excès sulfurique » à une valeur sensiblement constante et comprise entre 1 et 2 % ;

b) on contrôle et on maintient dans la cuve intermédiaire à une valeur comprise entre — 0,5 et + 0,5 % le « taux d'excès sulfurique » ;

c) la désulfatation est réalisée par introduction directe de phosphate tricalcique dans le mélange réactionnel provenant de la cuve d'attaque ;

d) pour obtenir une clarification du produit final, on ajoute un floculant au milieu réactionnel, après l'étape de filtration et lors de la défluoration précitée.

2. Procédé selon la revendication 1, caractérisé en ce que la défluoration précitée est réalisée à l'aide d'un agent à base d'un sel minéral tel que du métasilicate de sodium.

3. Procédé selon la revendication 2, caractérisé en ce que le métasilicate de sodium est ajouté en une quantité d'environ 200 g/l en poudre diluée dans de l'eau chaude.

4. Procédé selon la revendication 1, caractérisé en ce que l'on contrôle le taux d'excès sulfurique dans les cuves d'attaque et intermédiaire, par suivi de la courbe de titration de l'acide phosphorique.

## Claims

1. Process for the manufacture of concentrated phosphoric acid of high purity, by concentration and subsequent defluorination of a non-concentrated phosphoric acid obtained by

reaction, in an attack vat, of excess sulphuric acid on tricalcium phosphate ;

desulphation of the reaction mixture in an intermediate vat situated downstream of the said attack vat ;

filtration of the mixture thus obtained to separate the phosphoric acid from the solid calcium sulphate,

characterized in that

a) the « excess sulphuric level » is monitored and maintained in the attack vat at a value which is essentially constant and between 1 and 2 % ;

b) the « excess sulphuric level » is monitored and maintained in the intermediate vat at a value of between — 0.5 and + 0.5 % ;

c) desulphation is carried out by direct introduction of tricalcium phosphate into the reaction mixture coming from the attack vat ;

d) to obtain clarification of the final product, a flocculant is added to the reaction mixture, after the filtration step and at the time of the defluorination cited above.

2. Process according to Claim 1, characterized in that the defluorination cited above is carried out with the aid of an agent based on an inorganic salt such as sodium metasilicate.

3. Process according to Claim 2, characterized in that the sodium metasilicate is added in a quantity of about 200 g/l as a powder diluted in hot water.

4. Process according to Claim 1, characterized in that the excess sulphuric level in the attack and intermediate vats is monitored by following the titration curve of phosphoric acid.

## Patentansprüche

1. Verfahren zur Herstellung von konzentrierter Phosphorsäure mit höherer Reinheit durch Konzentrierung und anschließende Defluorierung einer nicht konzentrierten Phosphorsäure, erhalten durch

Umsetzung der Schwefelsäure im Überschuß mit Trikalziumphosphat in einem Ätzgefäß ;

Desulfatierung der Reaktionsmischung in einem stromabwärts vom Ätzgefäß befindlichen Zwischengefäß ;

Filtration der so erhaltenen Mischung zwecks Abtrennung der Phosphorsäure vom festen Kalziumsulfat,

dadurch gekennzeichnet, daß

a) man den « Grad des Schwefelsäureüberschusses » im Ätzgefäß auf einen im wesentlichen konstanten Wert, u. zw. zwischen 1 und 2 %, steuert und dort hält ;

b) man den « Grad des Schwefelsäureüberschusses » im Zwischengefäß auf einen Wert zwischen — 0,5 und + 0,5 % steuert und dort hält ;

c) die Desulfatierung durch direktes Einbringen von Trikalziumphosphat in die aus dem Ätzgefäß kommende Reaktionsmischung erfolgt ;

d) man zur Klärung des Endprodukts nach der Filtrationsstufe und bei der genannten Defluorierung ein Flockungsmittel zum Reaktionsmilieu zugibt.

2. Verfahren nach Anspruch 1, dadurch gekennzeichnet, daß die Defluorierung mit Hilfe eines Mittels auf Basis eines Mineralsalzes, wie Natriummetasilikat, durchgeführt wird.

3. Verfahren nach Anspruch 2, dadurch gekennzeichnet, daß das Natriummetasilikat in einer Menge von etwa 200 g/l als in heißem Wasser verdünntes Pulver zugegeben wird.

4. Verfahren nach Anspruch 1, dadurch gekennzeichnet, daß man den Grad des Schwefelsäureüberschusses im Ätz- und im Zwischengefäß durch Nachführung der Titrationskurve der Phosphorsäure steuert.

Fig-1

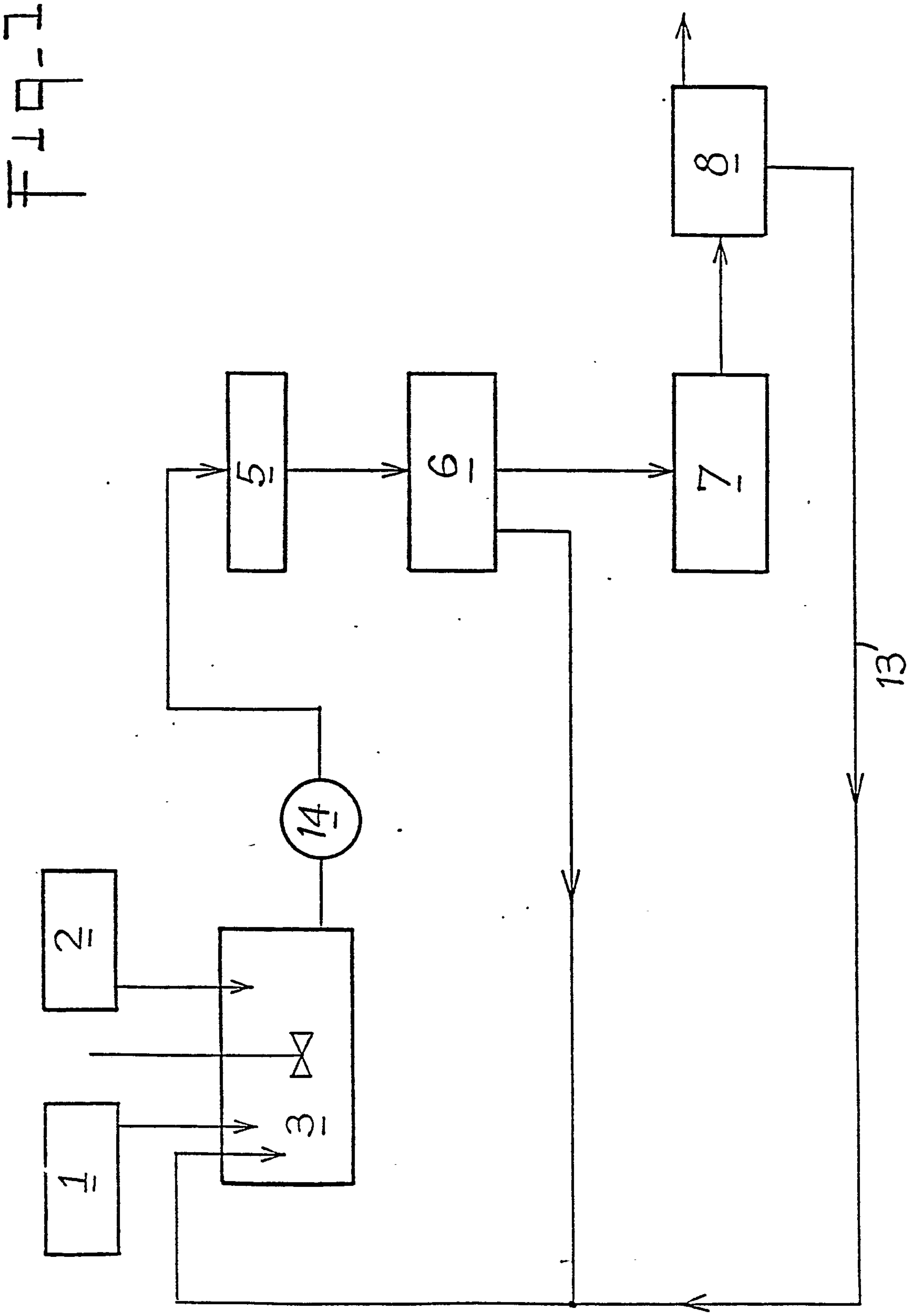

Fig-2